Europäisches Patentamt

European Patent Office

Office européen des brevets

(19)

(11) Veröffentlichungsnummer: **0 327 722 B1**

(12) **EUROPÄISCHE PATENTSCHRIFT**

(45) Veröffentlichungstag der Patentschrift: **15.09.93**

(51) Int. Cl.⁵: **C04B 35/14**, C04B 38/00, B01J 21/08, B01J 37/00

(21) Anmeldenummer: **88121566.9**

(22) Anmeldetag: **23.12.88**

Die Akte enthält technische Angaben, die nach dem Eingang der Anmeldung eingereicht wurden und die nicht in dieser Patentschrift enthalten sind.

(54) **Presslinge auf Basis von pyrogen hergestelltem Siliciumdioxid, Verfahren zu ihrer Herstellung und ihre Verwendung.**

(30) Priorität: **09.02.88 DE 3803895**

(43) Veröffentlichungstag der Anmeldung:
**16.08.89 Patentblatt 89/33**

(45) Bekanntmachung des Hinweises auf die Patenterteilung:
**15.09.93 Patentblatt 93/37**

(84) Benannte Vertragsstaaten:
**AT BE CH DE ES FR GB GR IT LI LU NL SE**

(56) Entgegenhaltungen:
**EP-A- 0 050 902
FR-A- 2 313 973
US-A- 4 617 060**

(73) Patentinhaber: **Degussa Aktiengesellschaft
Weissfrauenstrasse 9
D-60311 Frankturt(DE)**

(72) Erfinder: **Deller, Klaus, Dr.
Friedhofstrasse 47
D-6452 Hainburg(DE)**
Erfinder: **Klingel, Reinhard, Dr.
Taunusstrasse 6
D-8755 Alzenau(DE)**
Erfinder: **Krause, Helmfried
Odenwaldstrasse 39
D-6458 Rodenbach(DE)**

**Beschreibung**

Die Erfindung betrifft Preßlinge auf Basis von pyrogen hergestelltem Siliciumdioxid, Verfahren zu ihrer Herstellung und ihre Verwendung als Katalysatorträger oder Katalysator.

Pyrogen hergestellte Siliciumoxide zeichnen sich durch extreme Feinteiligkeit und entsprechend hohe spezifische Oberfläche, sehr hohe Reinheit, sphärische Teilchenform und das Fehlen von Poren aus. Aufgrund dieser Eigenschaften finden die pyrogen hergestellten Oxide zunehmend Interesse als Träger für Katalysatoren (D. Koth, H. Ferch, Chem. Ing. Techn. 52, 628 (1980).

Da pyrogen hergestellte Oxide besonders feinteilig sind, bereitet die Verformung zu Katalysatorträgern bzw. Katalysatoren einige Schwierigkeiten.

Aus der DE-OS 31 32 674 ist ein Verfahren zur Herstellung von Preßlingen aus pyrogen hergestellten Oxiden bekannt, in dem Kieselsol als Bindemittel verwendet wird.

Aus der DE-OS 34 06 185 ist ein Verfahren zur Herstellung von Preßlingen bekannt, indem man Glasurfrittenpulver als Bindemittel und Glycerin als Gleitmittel verwendet.

Aus der DE-PS 21 00 778 ist es bekannt Granulate auf Basis pyrogen hergestellter Siliciumdioxide zur Herstellung von z. B. Vinylacetatmonomer als Katalysatorträger einzusetzen.

Diese bekannten Verfahren haben den Nachteil, daß die erhaltenen Preßlinge für bestimmte katalytische Reaktionen wie z. B. die Vinylacetatherstellung aus Äthylen, Essigsäure und Sauerstoff oder die Hydratisierung von Äthylen zu Äthanol nicht die gewünschten optimalen Eigenschaften, wie z. B. eine hohe Bruchfestigkeit, aufweisen.

Gegenstand der Erfindung sind Preßlinge auf Basis von pyrogen hergestelltem Siliciumdioxid mit den folgenden physikalisch-chemischen Kenndaten:

| | |
|---|---|
| Außendurchmesser | 2 bis 15 mm |
| BET-Oberfläche | 50 bis 400 $m^2$ / g |
| Porenvolumen | 0,6 bis 1,3 ml / g |
| Bruchfestigkeit | 40 bis 120 N |
| Porenverteilung | keine Poren <5 nm Durchmesser mindestens 80 % im Bereich 5 bis 40 nm Durchmesser |
| Zusammensetzung | >95 Gew.-% $SiO_2$ Rest $Al_2O_3$ |

Ein weiterer Gegenstand der Erfindung ist ein Verfahren zur Herstellung von Preßlingen auf basis von pyrogen hergestelltem Siliciumdioxid mit den folgenden physikalisch -chemischen Kenndaten:

| | |
|---|---|
| Außendurchmesser | 2 bis 15 mm |
| BET-Oberfläche | 50 bis 400 $m^2$ / g |
| Porenvolumen | 0,6 bis 1,3 ml / g |
| Bruchfestigkeit | 40 bis 120 N |
| Porenverteilung | keine Poren <5 nm Durchmesser mindestens 80 % im Bereich 5 bis 40 nm Durchmesser |
| Zusammensetzung | >95 Gew.-% $SiO_2$ Rest $Al_2O_3$ |

welches dadurch gekennzeichnet ist, daß man pyrogen hergestelltes Siliciumdioxid mit Kaolin und/oder Graphit, Zucker, Stärke, Harnstoff, Wachs unter Zusatz von Wasser homogenisiert, bei einer Temperatur von 80 bis 120 °C trocknet, zu einem Pulver zerkleinert, das Pulver zu Preßlingen verpreßt und während eines Zeitraumes von 0,5 bis 6 Stunden bei einer Temperatur von 400 bis 1200 °C tempert.

Zur Durchführung des erfindungsgemäßen Verfahrens sind prinzipiell alle Mischer oder Mühlen geeignet, die eine gute Homogenisierung ermöglichen, wie z. B. Schaufel-, Wirbelschicht-, Kreisel- oder Luftstrommischer. Besonders geeignet sind Mischer, mit denen eine zusätzliche Verdichtung des Mischgutes möglich ist, z. B. Pflugscharmischer, Kollergänge oder Kugelmühlen. Nach dem Homogenisieren kann eine weitgehende Trocknung bei 80 - 120 °C erfolgen, so daß man nach dem Zerkleinern ein rieselfähiges Pulver erhält. Die Herstellung der Preßlinge kann auf Stempelpressen, Exzenterpressen, Strangpressen oder Rundlaufpressen als auch auf Kompaktoren erfolgen.

Vor dem Verpressen kann in einer besonderen Ausführungsform der Erfindung die Mischung die folgende Zusammensetzung aufweisen:
50 - 90 Gew.-% Siliciumdioxid, vorzugsweise 70 - 80 Gew.-%,

0,1 - 8 Gew.-% Kaolin, vorzugsweise 1 - 5 Gew.-% und/oder

0,1 - 10 Gew.-% Graphit, vorzugsweise 1 - 5 Gew.-%,

0,1 - 10 Gew.-% Wachs, vorzugsweise 1 - 5 Gew.-%,

5 - 45 Gew.-% Porenbildner wie Harnstoff, Zucker, Stärke, vorzugsweise 10 - 30 Gew.-%

Die Preßlinge können verschiedene, z. B. zylinderische, kugelförmige oder ringförmige, Formen mit einem Außendurchmesser vom 2 bis 15 mm aufweisen.

Die Preßlinge werden bei 400 - 1200 °C 30 Minuten bis 6 Stunden getempert.

Durch Variation der Einsatzstoffmengen und des Preßdruckes kann die Bruchfestigkeit, die spez. Gesamtoberfläche und das Porenvolumen in einem gewissen Rahmen verändert werden.

Die erfindungsgemäßen Preßlinge können entweder direkt als Katalysatoren oder als Katalysatorträger, nach dem die Formkörper während oder nach ihrer Herstellung mit einer Lösung einer katalytisch wirksamen Substanz getränkt und ggf. durch eine geeignete Nachbehandlung aktiviert wurden, Verwendung finden.

Insbesondere lassen sich die Preßlinge aus pyrogen hergestelltem Siliciumdioxid in der Anwendung als Träger für den Katalysator bei der Herstellung von Vinylacetatmonomer aus Ethylen, Essigsäure und Sauerstoff sowie als Katalysator im Ethylenhydratisierungsverfahren besonders gut verwenden.

Die erfindungsgemäßen Preßlinge weisen die folgenden Vorteile auf:

Hohe Festigkeit.

Hohes Porenvolumen.

Der überwiegende Anteil der Poren liegt im Mesoporenbereich.

Keine Poren <5 nm

Beispiele

Als pyrogen hergestelltes Siliciumdioxid werden Siliciumdioxide mit den folgenden physikalisch-chemischen Kenndaten eingesetzt:

| Aerosil | | 130 | 150 | 200 | 300 | 380 |
|---|---|---|---|---|---|---|
| Oberfläche nach BET | $m^2/g$ | 130±25 | 150±15 | 200±25 | 300±30 | 380±30 |
| Mittlere Größe der Primärteilchen | nm | 16 | 14 | 12 | 7 | 7 |
| Stampfdichte[1] | g/l | ca. 50 | ca. 50 | ca. 50 | ca. 50 | ca. 50 |
| Trocknungsverlust [2] (2 Stunden bei 105 °C) | % | < 1,5 | < 0,5[7] | < 1,5 | < 1,5 | < 1,5 |
| Glühverlust [2][5] (2 Stunden bei 1000 °C) | % | < 1 | < 1 | < 1 | < 2 | < 2,5 |
| pH-Wert[3] (in 4%iger wäßriger Dispersion) | | 3,6-4,3 | 3,6-4,3 | 3,6-4,3 | 3,6-4,3 | 3,6-4,3 |
| $SiO_2$[6] | % | > 99,8 | > 99,8 | > 99,8 | > 99,8 | > 99,8 |
| $Al_2O_3$[6] | % | < 0,05 | < 0,05 | < 0,05 | < 0,05 | < 0,05 |
| $Fe_2O_3$[6] | % | < 0,003 | < 0,003 | < 0,003 | < 0,003 | < 0,003 |
| $TiO_2$[6] | % | < 0,03 | < 0,03 | < 0,03 | < 0,03 | < 0,03 |
| HCl[6][8] | % | < 0,025 | < 0,025 | < 0,025 | < 0,025 | < 0,025 |
| Siebrückstand [4] (nach Mokker, 45 µm) | % | < 0,05 | < 0,05 | < 0,05 | < 0,05 | < 0,05 |

...

[1] nach DIN 53 194

[2] nach DIN 55 921

[3] nach DIN 53 200

[4] nach DIN 53 580

[5] bezogen auf die 2 Stunden bei 105 °C getrocknete Substanz

[6] bezogen auf die 2 Stunden bei 1000 °C geglühte Substanz

[8] HCL-Gehalt ist Bestandteil des Glühverlustes

Zur Herstellung von AEROSIL wird in eine Knallgasflamme aus Wasserstoff und Luft eine flüchtige Siliciumverbindung eingedüst. In den meisten Fällen verwendet man Siliciumtetrachlorid. Diese Substanz hydrolysiert unter dem Einfluß des bei der Knallgasreaktion entstehenden Wassers zu Siliciumdioxid und Salzsäure. Das Siliciumdioxid tritt nach dem Verlassen der Flamme in eine sog. Koagulationszone ein, in der die AEROSIL -Primärteilchen und Primäraggregate agglomerieren. Das in diesem Stadium als eine Art Aerosol vorliegende Produkt wird in Zyklonen von den gasförmigen Begleitsubstanzen getrennt und anschließend mit feuchter Heißluft nachbehandelt. Durch dieses Verfahren läßt sich der Rest - Salzsäuregehalt unter 0,025 % senken. Da das AEROSIL am Ende dieses Prozesses mit einer Schüttdichte von nur ca. 15 g / l anfällt, wird eine Vakuumverdichtung angeschlossen, mit der sich Stampfdichten von ca. 50 g / l und mehr einstellen lassen.

Die Teilchengrößen der auf diese Weise gewonnenen Produkte können mit Hilfe der Reaktionsbedingungen variiert werden. Solche Parameter sind z. B. die Flammentemperatur, der Wasserstoff- oder Sauerstoffanteil, die Siliciumtetrachloridmenge, die Verweilzeit in der Flamme oder die Länge der Koagulationsstrecke.

Die BET-Oberfläche wird gemäß DIN 66 131 mit Stickstoff bestimmt.

Das Porenvolumen wird rechnerisch aus der Summe von Mikro-, Meso- und Makroporenvolumen bestimmt.

Die Bruchfestigkeit wird mittels des Bruchfestigkeitstesters der Fa. EWERKA, Typ TBH 28 bestimmt.

Die Bestimmung der Mikro- und Mesoporen erfolgt durch Aufnahme einer $N_2$-Isotherme und deren Auswertung nach BET, de Boer und Barret, Joyner, Halenda.

Die Bestimmung der Makroporen erfolgt durch das Hg Einpreßverfahren.

Beispiel 1

77 Gew.-% Aerosil 200
4 Gew.-% Graphit
4 Gew.-% Kaolin und
15 Gew.-% Zucker werden unter Zusatz von Wasser kompaktiert,
bei 100 °C über 24 Stunden getrocknet, zu einem rieselfähigen Pulver zerkleinert und auf der Exzenterpresse zu Preßlingen verpreßt.

Die Rohtabletten werden bei 900 °C während 4 Stunden getempert.

Die erhaltenen Preßlinge weisen die folgenden physikalisch -chemischen Kenndaten auf:

| | |
|---|---|
| Außendurchmesser | 9 mm |
| BET-Oberfläche | 192 m² / g |
| Porenvolumen | 1,28 ml / g |
| Bruchfestigkeit | 45 N |
| porenverteilung | keine Poren <5 nm Durchmesser, 81 % der Poren im Bereich von 5 bis 40 nm Durchmesser |
| Zusammensetzung | 97,5 Gew.-% $SiO_2$ |
| | 2,5 Gew.-% $Al_2O_3$ |

Beispiel 2

77 Gew.-% Aerosil 200
4 Gew.-% Graphit
4 Gew.-% Kaolin und
15 Gew.-% Stärke
werden gemäß Beispiel 1 zu Preßlingen verformt.

Die erhaltenen Preßlinge weisen die folgenden physikalisch -chemischen Kenndaten auf:

| | |
|---|---|
| Außendurchmesser | 9 mm |
| BET-Oberfläche | 195 m$^2$ / g |
| Porenvolumen | 1,16 ml / g |
| Bruchfestigkeit | 58 N |
| Porenverteilung | keine Poren <5 nm Durchmesser 81 % der Poren im Bereich von 5 - 40 nm Durchmesser |
| Zusammensetzung | 97,5 Gew.-% SiO$_2$ |
| | 2,5 Gew.-% Al$_2$O$_3$ |

Beispiel 3

77 Gew.-% Aerosil 380
19 Gew.-% Harnstoff
4 Gew.-% Wachs
werden gemäß Beispiel 1 zu Preßlingen verformt.

Die Temperung erfolgt bei 700 °C.

Die erhaltenen Preßlinge weisen die folgenden physikalisch-chemischen Kenndaten auf:

| | |
|---|---|
| Außendurchmesser | 5 mm |
| BET-Oberfläche | 345 m$^2$ / g |
| Porenvolumen | 1,07 ml / g |
| Porenverteilung | keine Poren <5 nm Durchmesser 88 % der Poren im Bereich von 5 - 40 nm Durchmesser |
| Bruchfestigkeit | 42 N |
| Zusammensetzung | 97,5 Gew.-% SiO$_2$ |
| | 2,5 Gew.-% Al$_2$O$_3$ |

**Patentansprüche**

1. Preßlinge auf Basis von pyrogen hergestelltem Siliciumdioxid mit den folgenden physikalisch - chemischen Kenndaten:

| | |
|---|---|
| Außendurchmesser | 2 bis 15 mm |
| BET-Oberfläche | 50 bis 400 m$^2$ / g |
| Porenvolumen | 0,6 bis 1,3 ml / g |
| Bruchfestigkeit | 40 bis 120 N |
| Porenverteilung | keine Poren <5 nm Durchmesser, mindestens 80 % im Bereich 5 bis 40 nm Durchmesser |
| Zusammensetzung | >95 Gew.-% SiO$_2$ |
| | Rest Al$_2$O$_3$ |

2. Verfahren zur Herstellung von Preßlingen auf Basis von pyrogen hergestelltem Siliciumdioxid mit den folgenden physikalisch-chemischen Kenndaten:

6

| Außendurchmesser | 2 bis 15 mm |
|---|---|
| BET-Oberfläche | 50 bis 400 $m^2$ / g |
| Porenvolumen | 0,6 bis 1,3 ml / g |
| Bruchfestigkeit | 40 bis 120 N |
| Porenverteilung | keine Poren <5 nm Druchmesser, mindestens 80 % im Bereich 5 bis 40 nm Durchmesser |
| Zusammensetzung | >95 Gew.-% $SiO_2$, Rest $Al_2O_3$ |

dadurch gekennzeichnet, daß man pyrogen hergestelltes Siliciumdioxid mit Kaolin und/oder Graphit, Zucker, Stärke, Harnstoff, Wachs unter Zusatz von Wasser homogenisiert, bei einer Temperatur von 80 bis 120 °C trocknet, zu einem Pulver zerkleinert, das Pulver zu Preßlingen verpreßt und während eines Zeitraumes von 0,5 bis 6 Stunden bei einer Temperatur von 400 bis 1200 °C tempert.

3. Verwendung der Preßlinge gemäß Anspruch 1 als Katalysatorträger oder Katalysator.

## Claims

1. Compacts based on pyrogenically prepared silicon dioxide and having the following physical-chemical characteristic data:

| External diameter | 2 to 15 mm |
|---|---|
| BET surface area | 50 to 400 $m^2$/g |
| Pore volume | 0.6 to 1.3 ml/g |
| Breaking strength | 40 to 120 N |
| Pore distribution | no pores <5 nm in diameter, at least 80% in the range 5 to 40 nm in diameter |
| Composition | >95% by weight of $SiO_2$ remainder $Al_2O_3$ |

2. Process for the production of compacts based on pyrogenically prepared silicon dioxide and having the following physical-chemical characteristic data:

| External diameter | 2 to 15 mm |
|---|---|
| BET surface area | 50 to 400 $m^2$/g |
| Pore volume | 0.6 to 1.3 ml/g |
| Breaking strength | 40 to 120 N |
| Pore distribution | no pores <5 nm in diameter, at least 80% in the range 5 to 40 nm in diameter |
| Composition | >95% by weight of $SiO_2$ remainder $Al_2O_3$, |

characterized in that pyrogenically prepared silicon dioxide is homogenized with kaolin and/or graphite, sugar, starch, urea or wax with addition of water, the mixture is dried at a temperature of from 80 to 120°C and comminuted to form a powder, the powder is pressed to form compacts, and the compacts are conditioned at a temperature of from 400 to 1,200°C for a period of 0.5 to 6 hours.

3. Use of the compacts according to Claim 1 as a catalyst support or catalyst.

## Revendications

1. Pièces pressées à base de dioxyde de silicium produit par pyrogénation, ayant les caractéristiques physico-chimiques suivantes :

| Diamètre externe | 2 à 15 mm |
|---|---|
| Surface selon BET | 50 à 400 m$^2$/g |
| Volume des pores | 0,6 à 1,3 ml/g |
| Résistance à la rupture | 40 à 120 N |
| Répartition des pores | aucun pore < 5 nm de diamètre, au moins 80 % dans la zone de 5 à 40 nm de diamètre |
| Composition | > 95 % en poids de SiO$_2$ le reste Al$_2$O$_3$ |

2. Procédé d'obtention de pièces pressées à base de dioxyde de silicium produit par pyrogénation ayant les caractéristiques physico-chimiques suivants :

| Diamètre externe | 2 à 15 mm |
|---|---|
| Surface selon BET | 50 à 400 m$^2$/g |
| Volume des pores | 0,6 à 1,3 ml/g |
| Résistance à la rupture | 40 à 120 N |
| Répartition des pores | aucun pore < 5 nm de diamètre, au moins 80 % dans la zone de 5 à 40 nm de diamètre |
| Composition | > 95 % en poids de SiO$_2$, le reste en Al$_2$O$_3$ |

caractérisé en ce que l'on homogénéise le dioxyde de silicium produit par pyrogénation, avec du kaolin et/ou du graphite, du sucre, de l'amidon, de l'urée, de la cire, tout en ajoutant de l'eau, que l'on sèche à une température de 80 à 120 °C, que l'on pulvérise en une poudre, que l'on comprime la poudre en pièces pressées et que l'on procède au recuit pendant un espace de temps de 0,5 à 6 heures à une température de 400 à 1200 °C.

3. Utilisation des pièces pressées conformément à la revendication 1 comme support de catalyseur ou comme catalyseur.